# EUROPÄISCHE PATENTSCHRIFT

(11) **EP 2 480 309 B1**
(45) Veröffentlichungstag und Bekanntmachung des Hinweises auf die Patenterteilung: **21.10.2015**
(21) Anmeldenummer: 10757067.3
(22) Anmeldetag: 20.09.2010
(51) Int. Cl.: B01D 29/33, B01D 29/03

(54) **RAUCHGASENTSCHWEFELUNGSANLAGE MIT SUSPENSIONSLÖSUNGSFILTERSIEBKORB**
FLUE GAS DESULPHURIZATION PLANT WITH FILTER SIEVE BASKET FOR SUSPENSION SOLUTION
INSTALLATION DE DESULFURATION DES GAZ DE FUMEE AVEC PANIER DE TAMIS DE FILTRE POUR SOLUTION EN SUSPENSION

(30) Priorität: 21.09.2009 DE 202009012640 U
(43) Veröffentlichungstag der Anmeldung: 01.08.2012
(73) Patentinhaber: REA Plastik Tech GmbH, 16816 Neuruppin (DE)
(72) Erfinder: NEUBAUER, Georg, 14624 Dallgow-Döberitz (DE); WILHELM, Jakob, 16816 Neuruppin (DE); WEBER, Detlef, 45147 Essen (DE)
(74) Vertreter: Kluin, Jörg-Eden
(86) Internationale Anmeldenummer: PCT/EP2010/063781
(87) Internationale Veröffentlichungsnummer: WO 2011/033101

(56) Entgegenhaltungen:
- DE-A1- 4 107 432
- DE-B3-102008 006 173
- DE-C- 628 980
- GB-A- 2 287 200
- US-A- 5 407 563
- US-A- 6 165 323

## Beschreibung

Die Erfindung bezieht sich auf Suspensionslösungsfiltersiebkörbe für den Einsatz in der Rauchgasentschwefelung (REA) von Großkraftwerken und ein Verfahren zu deren Herstellung.

Die REA eines Kohle-, Öl- oder Braunkohlekraftwerks scheidet das S_{O2} ab, das im Verbrennungsprozess entsteht und verhindert, dass sich aus diesem S_{O2} in der Atmosphäre S_{O3} - also Schwefelsäure bildet. Diese Schwefelsäure regnet nämlich ab und versauert die Böden und war für das Waldsterben in vielen Bereichen Europas mitverantwortlich (saurer Regen).

Der chemische Prozess in der REA bindet das S_{O2} mit Kalkstein oder anderen Reagenzien zu Gips. Dabei kommt es zu vielfältigen chemischen Reaktionen an denen eine ganze Reihe der Stoffe teilnehmen können, die typischerweise Bestandteil des Rauchgases sind oder zusammen mit dem Reagenz der REA üblicherweise Kalkstein in den Prozess eingebracht worden sind. Dazu gehören Flugasche, Chloride, Fluoride, Mineralien usw.

Eine Erfahrung mit dem REA Prozess in einem Großkraftwerk ist, dass sich immer wieder Anbackungen an den Wänden und an den internen Komponenten (Rohrleitungen, Düsen, Balken, usw.) der REA bilden. Diese Anbackungen sind zum Teil Ergebnis des Oxidationsprozesses des S_{O2} und zum Teil Folge von chemischen Prozessen der anderen Bestandteile des Rauchgases und des Kalksteins. Diese Ablagerungen sind häufig das Resultat von chemischen Kristallisationsprozessen und daher sehr hart und rigide. Sie haben oft die Härte und Konsistenz von Ton- oder Porzellanscherben und oft auch deren Aussehen.

Diese Anbackungen können sich durchaus während des Betriebes von dem Untergrund lösen. Ursache für diese Ablösung sind Temperaturschwankungen (thermische Expansion und Schrumpfung zerbrechen die Ablagerungen und lösen sich) oder mechanische Kräfte wie Vibration oder Druckschläge. Diese Anbackungen fallen dann in den Wäschersumpf. Sie haben unterschiedliche Größen - von einem Durchmesser von 10 mm bis zu 1000 mm.

Diese Anbackungsscherben und Festkörper können im REA Prozess durchaus erhebliche schädliche Wirkung haben. Sie können Komponenten der REA beschädigen, sie können zu einer beschleunigten Abnutzung führen oder sie können durch Verstopfungen den Prozess erheblich stören.

Zu typischen Schäden und Störungen gehören die folgenden Beispiele:
1. Schäden an der Pumpe
   Bei gummierten Rezirkulationspumpen können diese harten und teilweise sogar mit scharfen Kanten versehenen Anbackungsscherben die Gummierung beschädigen und damit zu Korrosion am Pumpenkörper führen.
2. Abrasion an den Rezirkulationsleitungen
   Die Innenschicht der Rezirkulationsleitung - ob Gummierung, GFK oder Polypropylen wird durch diese großen und harten Körper geschliffen und abgenutzt, wenn die Suspensionsflüssigkeit nach oben zur Sprühebene strömt.
3. Verstopfung von Sprühebenen und Sprühdüsen
   Die großen Stücke sammeln sich in den Sprühebenen zu größeren Haufen. Sie fließen langsamer als die Suspensionsflüssigkeit. Wenn eine ausreichende
   Anzahl von großen Teilen zusammenkommt, kann das durchaus dazu führen, dass das Düsenrohr an einer engeren Stelle verstopft oder dass die Teile in der Sprühdüse zum Stillstand kommen und diese verstopfen.
4. Abrasion Sprühebenen
   Diese Anbackungsscherben werden von den Sprühdüsen auf die darunter liegenden Sprühebenen geschleudert und verursachen beim Auftreffen auf die Oberfläche Abrasion und Beschädigung.
5. Gipsentwässerung
   Im Gipsentwässerungsprozess können diese Teile ebenfalls zu Störungen und Problemen führen:

Die Kraftwerke haben deshalb das Interesse, die größeren dieser Anbackungsscherben im REA Sumpf zu halten und zu vermeiden, dass diese Scherben in andere Bauteile kommen und dort Schäden oder Störungen verursachen.

Dies ist die Aufgabe der Suspensionslösungsfiltersiebkörbe, die vor den Pumpen und vor den Ausgängen zur Gipsentwässerung installiert werden. Diese Suspensionslösungsfiltersiebkörbe halten die großen Feststoffteile im REA Sumpf und vermeiden, dass sie in die anderen Prozessschritte geraten und dort die beschriebenen Schäden anrichten.

Diese Suspensionslösungsfiltersiebkörbe sind üblicherweise mit Löchern von 20 mm bis 25 mm gefertigt, halten also alle Teile zurück, die diesen oder einen größeren Durchmesser haben.

Diese Siebe wurden zunächst aus hochwertigen Edelstählen gefertigt. Dies hatte einerseits den Effekt, dass die Anschaffung und Installation dieser Suspensionslösungsfiltersiebkörbe zu einer sehr kostenintensiven Investition wurde. Andererseits musste man feststellen, dass sich Edelstahl nur sehr begrenzt für diese Anbackung eignet.

So kam es immer wieder zu starker Korrosion dieser Suspensionslösungsfiltersiebkörbe, die Suspensionslösungsfiltersiebkörbe mussten ausgetauscht werden. Es mussten immer höher legierte Stähle genommen werden, um diese Korrosion zu vermeiden (was natürlich die Kosten weiter in die Höhe trieb).

Auf der anderen Seite musste man feststellen, dass sich auf dem Stahl ebenfalls Anbackungen bildeten. Die Suspensionslösungsfiltersiebkörbe wuchsen über die Zeit regelrecht zu. Der Druckverlust stieg an und die Siebe mussten offline gereinigt werden.

Es wurden auch Siebe aus GFK eingesetzt. Auch hier stellte man schnell fest, dass die Funktion nur eingeschränkt war. Einerseits kam es immer wieder zu Schäden des GFK, was dann zu GFK Korrosion führte (Ablösung der Glassfasern vom Harz) und andererseits kam es durch herabfallende große Anbackungen und die schnellen Druckwechsel beim An- und Abschalten der Pumpen immer wieder zu Bruchschäden. GFK stellte sich als ein Material heraus, das nicht für diese Anwendung geeignet ist.

Thermoplaste - vorzugsweise Polypropylen - erwiesen sich als am besten geeignet für diese Anwendung. Einerseits sind Thermoplaste auch in dieser Umgebung korrosionsfrei und andererseits erwiesen sich die Suspensionslösungsfiltersiebkörbe aus Thermoplast als robust und verschmutzungsunauffällig. Es kam weder zu den Schäden wie bei GFK noch zu diesen massiven Anbackungen wie bei Edelstahl. Inzwischen wird die Mehrzahl aller neuen REA mit Suspensionslösungsfiltersiebkörben aus Polypropylen ausgerüstet.

Bei den Temperaturen, die im REA Sumpf herrschen, ist Polypropylen relativ weich und hat nur eine begrenzte Stabilität. Deshalb muss der Suspensionslösungsfiltersiebkorb aus relativ dickem Material hergestellt werden (20 mm Polypropylenplatte) und zusätzlich mit Rippen versteift werden.

Trotzdem kommt es immer wieder vor, dass Suspensionslösungsfiltersiebkörbe im Betrieb beschädigt werden. Die Ursache dieser Schäden ist üblicherweise, dass sich Anbackungsscherben in den Löchern des Suspensionslösungsfiltersiebkorbes verfangen und stecken bleiben. Das Rohr ist dann weitgehend oder völlig verstopft. Wenn dann eine große Zahl der Löcher verstopft ist, dann steigt der Druckverlust und zunehmend wird die Pumpensaugkraft auf den Körper des Suspensionslösungsfiltersiebkorbs geführt. Irgendwann führt das dann zu Deformation des Suspensionslösungsfiltersiebkorbes bis hin zur Zerstörung.

Die Kraftwerke verfolgen natürlich den Betrieb der Suspensionslösungsfiltersiebkörbe und versuchen die drohenden Schäden zu erkennen und vorab diese zu vermeiden. Es wird die Stromaufnahme der Pumpen gemessen oder der Druckverlust der Pumpe. Wenn die Stromaufnahme ansteigt oder sich die Druckverlustverhältnisse ändern, dann ist das ein Hinweis darauf, dass ein großer Teil der Löcher des Suspensionslösungsfiltersiebkorbs verstopft.ist.

Es wurde mit internen online Waschsystemen experimentiert. Es stellte sich jedoch heraus, dass unter Wasser diese Reinigungsmechanismen nur sehr eingeschränkt einsetzbar sind. Es wurde deshalb ein anderer Weg beschritten: Diese Suspensionslösungsfiltersiebkörbe werden per "backflush" freigespült. Es wird die Pumpe abgestellt und die Flüssigkeit in den Rezirkulationsleitungen nicht über die Entwässerungsabfluss abgelassen sondern über den Suspensionslösungsfiltersiebkorb wieder zurück in den Sumpf fließen gelassen. Dieses Zurückströmen durch den Suspensionslösungsfiltersiebkorb befreit den Suspensionslösungsfiltersiebkorb von Anbackungsteilen die in den Löchern des Suspensionslösungsfiltersiebkorbs stecken oder sogar nur an den Löchern liegen und dort durch die Ansaugkraft gehalten werden. Eine Klappe, bzw. Siebkorbdeckel im Suspensionslösungsfiltersiebkorb verhindert, dass der Falldruck der bis zu 25 m hohen Flüssigkeitssäule in der Rezirkulationsleitung den Suspensionslösungsfiltersiebkorb aus seiner Befestigung wirft.

Es wurde allerdings auch festgestellt, dass dieses backflush nur begrenzt hilft. Es wird nur ein Teil der Anbackungen entfernt, die in den Löchern stecken. Ein anderer und mit der Zeit größer werdender Teil der Anbackungen bleibt in den Löchern des Suspensionslösungsfiltersiebkorbes stecken und muss in der Revision manuell entfernt werden.

Eine Analyse derartiger in Suspensionslösungsfiltersiebkörben feststeckender Anbackungsscherben hat gezeigt, dass dies etwas mit der Konfiguration der Löcher bzw. mit dem Fertigungsprozess zu tun hat. Bisher wurden diese Löcher mit Bohrern ausgebohrt. Es entstanden dadurch zylindrische Löcher.

Eine genaue Analyse der Fertigungstechnik zeigt jedoch, dass diese Fertigungsmethode für die Verschmutzungsproblematik einen ganz erheblichen Nachteil hat. Nach dem Bohren der Löcher muss nämlich die Platte zu einem Halbkreis gebogen werden, der dann die typische Form des Suspensionslösungsfiltersiebkorbes bildet. Der Halbkreis ist wichtig, um dem relativ weichen Material die statische Stärke zu geben, um den Kräften der Pumpe bei Verschmutzung ohne Deformation zu widerstehen.

Es ist nun bekannt, dass das Verformen einer Platte zu einem Halbkreis zu einer Deformation des Materials führt. Die äußere Seite der Platte wird gedehnt und die innere Seite des Halbkreises wird gestaucht. Dies bedeutet für das konische Loch, das durch das Bohren entstanden ist, dass es nun eine konische Form angenommen hat. Der Durchmesser an der Außenseite des Suspensionslösungsfiltersiebkorbs wurde aufgeweitet und der Durchmesser an der Innenseite des Suspensionslösungsfiltersiebkorbs wurde gestaucht also reduziert. Außerdem ist das Loch nicht mehr rund.

Diese Form des Lochs ist für den Einsatzzweck außerordentlich nachteilig. Denn diese konische Form des Lochs bedeutet nun, dass mit dem Flüssigkeitsstrom Festkörper in das Loch eindringen können, weil sie etwas kleiner sind als der äußere Eintritt - allerdings das Loch nach innen nicht mehr verlassen können, weil der Festkörper zu groß ist.

Diese Sachlage wird weiter dadurch verschlimmert, als sich die Oberfläche im Loch durch die Herstellung (Bohren oder Fräsen) rau und unregelmäßig geworden ist. Durch das Biegen wurde diese Unregelmäßigkeit sogar noch verstärkt.

Es mag nun so sein, dass diese Problematik von untergeordneter Bedeutung erscheint. Es erscheint auf den ersten Blick etwas unwahrscheinlich, dass die Festkörper immer genau die Größe des Lochs haben.

Es müssen aber drei Faktoren berücksichtigt werden:
1. 8.000-16.000 Stunden Betrieb
   Das Kraftwerk soll idealerweise 8.000 bis 16.000 Stunden ohne Störung und Unterbrechung in Betrieb sein - und es werden jede Stunde viele tausend Kubikmeter durch den Suspensionslösungsfiltersiebkorb gezogen. Über diese lange Dauer ist schon zu erwarten, dass eine größere Anzahl von Festkörpern in genau der richtigen Größe auftaucht.
2. Rührwerke
   Der Sumpf wird über Rührwerke permanent in Bewegung gehalten, um das Absetzen und Verfestigen der Schwebstoffe zu verhindern und die Oxidation des SO2 zu verbessern. Damit werden ständig neue Festkörper an die Suspensionslösungsfiltersiebkörbe herangetragen.
3. Anwachsen und Abrasion
   In dieser ständigen Bewegung ändert sich auch die Form und die Größe der Festkörper. Einerseits wird durch Abrasion und Kollision die Größe reduziert und andererseits wachsen die Festkörper aufgrund der Oxidationsprozesse ständig in der Größe.

Fest steht auch, dass die Siebe über die Zeit zunehmend verstopfen. Durch das oben beschriebene "backflush" kann die Verstopfung immer wieder reduziert werden aber mit zunehmender Zeit immer weniger. Es kommt also zu Verstopfungen, die nicht durch den "backflush" beseitigt werden können.

Es handelt sich dabei üblicherweise um Festkörper, die in den Löchern feststecken und auch durch den finalen "backflush" (Entleeren der Rezirkulationsleitungen beim Abfahren) nicht aus dem Suspensionslösungsfiltersiebkorb herausgewaschen werden konnten.

Die Problematik wird dadurch verschärft, dass die Festkörper, die in den Löchern feststecken anfangen durch chemische Kristallisationsprozesse zu wachsen. Das von den metallischen Suspensionslösungsfiltersiebkörben beobachtete langsame Zuwachsen tritt bei den thermoplastischen Suspensionslösungsfiltersiebkörben nur in sehr geringer Form auf. Allerdings kann es doch zu einem Zuwachsen der Löcher kommen, wenn ein Festkörper im Loch feststeckt und dann aufwächst.

Die GB 2 287 200 A zeigt eine Vorrichtung zum Auffinden und Trennen von festen und flüssigen Materialien in einem Schlamm oder Ähnlichem. Die Vorrichtung umfasst eine Platte mit Schlitzanordnungen.

Aus der US 6 165 232 A ist ein "Digestor" in Zusammenhang mit Zellulosebrei bekannt. Es sind Siebplatten offenbart, die Schlitze aufweisen, die sich nach außen hin öffnen.

Die US 5 407 563 A offenbart Siebplatten zur Anwendung in Wasser- und Müllbehandlungsanlagen. Die Siebplatten sind aus Kunststoff gefertigt und die Löcher darin bereits während des Herstellungsprozesses eingebracht.

Die DE 628 980 C zeigt ein Kunststoffsieb mit in der Durchgangsrichtung sich erweiternden Öffnungen.

Die DE 10 2008 006 173 B3 zeigt einen besonders korrosionsfesten Suspensionslösungsfiltersiebkorb zur Sicherung von Zu- oder Abläufen in einem Rauchgaswäscher einer Rauchgasentschwefelungsanlage.

Aus der DE 41 07 432 A1 ist eine Vorrichtung zum Abscheiden grober Feststoffe aus Flüssigkeiten, insbesondere im Verlauf einer Kühlwasserleitung, bekannt. Es ist ein kalottenförmiges Sieb vorgesehen und eine entlang des Siebes verschwenkbare Absaugvorrichtung zur Reinigung. Der zentrale Teil des Siebelements kann als Überdruckklappe ausgeführt sein, die um eine Achse drehbar ist und bei Überlastung des Siebelements öffnet.

Die Erfindung hat es sich zur Aufgabe gemacht eine Rauchgasentschwefelung zu schaffen, die gegen Verstopfung und Zerstörung besonders gesichert ist. Es sollen insbesondere die Rezirkulationsleitungen, Pumpen, Sprühebenen, Sprühdüsen und die Komponenten der Gipsentwässerung von großen Festkörpern frei gehalten und die durch sie entstehenden Störungen und Beschädigungen vermieden werden.

Diese Aufgabe wird durch die in Anspruch 1 wiedergegebene Rauchgasentschwefelungsvorrichtung gelöst.

Die Erfindung umfasst eine Rauchgasentschwefelungsvorrichtung, mit einem Sumpf mit Suspensionslösung, mit mindestens einer Rezirkulationsleitung, mit mindestens einer Rezirkulationspumpe, mit Sprühdüsen, bei der in Fließrichtung der Suspensionslösung vor der Rezirkulationsleitung mindestens ein Suspensionslösungsfiltersiebkorb vorgesehen ist.

Die Rauchgasentschwefelungsvorrichtung umfasst auch eine Gipsentwässerung und es ist vorzugsweise auch vor dem Gipsentwässerungsprozess ein Suspensionslösungsfiltersiebkorb vorgesehen.

Der Suspensionslösungsfiltersiebkorb der erfindungsgemäßen Rauchgasentschwefelungsvorrichtung weist Löcher auf, durch die die Suspensionslösung hindurchströmen kann, Feststoffe ab einer bestimmten Größe jedoch zurückgehalten werden. Die Löcher weiten sich bevorzugt von außen nach innen durchgehend auf.

Der Begriff "außen" bezeichnet in diesem Zusammenhang die der Strömung der Suspensionslösung zugewandte Seite. Mit "innen" ist in diesem Zusammenhang dementsprechend die der Strömung der Suspensionslösung abgewandte Seite bezeichnet.

Diese Form der Löcher (Aufweiten von außen nach innen) führt dazu, dass ein Festkörper entweder gar nicht erst in das Loch eindringen kann (zu groß) oder aufgrund der Aufweitung nach innen hin das Loch auch sicher wieder verlassen kann, wenn er einmal durch den außen liegenden Lochquerschnitt eindringen konnte.

Durch diese einfache bevorzugte Lösung ist die Gefahr erheblich reduziert, dass sich Festkörper im Loch festsetzen. Sie bleiben jetzt entweder außen am Loch hängen und werden durch die Saugkraft der Pumpe gehalten oder sie können das Loch nach innen hin wieder sicher verlassen. Die jetzt noch entstehenden Verstopfungen an der Außenseite des Suspensionslösungsfiltersiebkorbs können durch den "backflush" relativ sicher wieder entfernt werden.

Es ist eine Sollbruchstelle an dem Suspensionslösungsfiltersiebkorb vorgesehen, die bei Überschreiten einer Sauglast der Pumpe auf den Siebkörper "bricht" und damit eine Entlastung des Siebkorbkörpers von den Kräften, bevorzugt von der Sauglast der Pumpe, bewirkt.

Mit dem Begriff "Brechen" ist im Rahmen dieser Druckschrift auch ein zerstörungsfreies Auslösen gemeint.

Die Sollbruchstelle fungiert bevorzugt als Notsicherung. Sie bewirkt vorzugsweise, dass die oben beschriebene Überlastung des Suspensionslösungsfiltersiebkorbs und der Pumpe nur bis zu einem bestimmten Punkt ansteigen kann. Wird dieser Lastpunkt erreicht und überschritten, dann "bricht" die Sollbruchstelle in der bevorzugten Ausführungsform und es kommt zu einer Entlastung der Situation.

Der Suspensionslösungsfiltersiebkorb weist einen Siebkorbdeckel auf. Der Siebkorbdeckel ist an der oberen Seite des Suspensionslösungsfiltersiebkorbs angeordnet. Die Sollbruchstelle bewirkt nach dem Brechen eine zumindest teilweise Öffnung von zumindest Teilen des Siebkorbdeckels. Vorzugsweise öffnet sich durch das Brechen der Sollbruchstelle der gesamte Siebkorbdeckel, besonders bevorzugt vollständig.

Vorzugsweise ist der Siebkorbdeckel so konfiguriert, dass er sich bei Erreichen des Maximallastpunktes schlagartig öffnet.

In der bevorzugten Ausführungsform bleibt der Siebkorbdeckel auch nach dem aufgrund des Bruchs der Sollbruchstelle erfolgten Öffnen mit dem Suspensionslösungsfiltersiebkorb verbunden und kann daher nicht in die Pumpe gesaugt werden.

Vorzugsweise ist der Suspensionslösungsfiltersiebkorb nach dem Brechen der Sollbruchstelle einfach in den Ausgangszustand zurückzuversetzen. Es wird also bevorzugt durch das Brechen der Sollbruchstelle allenfalls ein einfach reparierbarer Schaden verursacht.

Wenn sich bei Erreichen der Sollbruchlast der Siebkorbdeckel völlig löst und dann ganz oder in Stücken in die Pumpe gesaugt wird, dann ist mit großen Schäden an der Pumpe zu rechnen bzw. wird die Pumpe ausfallen. Damit durch das Brechen der Sollbruchstelle allenfalls ein einfach reparierbarer Schaden verursacht wird, erfolgt zum einen der Bruch der Sollbruchstelle bevorzugt so, dass der Siebkorbdeckel in das Innere des Suspensionslösungsfiltersiebkorbs gezogen wird, (wodurch die vormals durch den Siebkorbdeckel abgedeckte Fläche jetzt für den Flüssigkeitsstrom zur Verfügung steht), bevorzugt aber andererseits der Siebkorbdeckel nicht in den Ansaugstutzen der Pumpe gelangen kann.

Zum anderen ist vorzugsweise die Sollbruchstelle selbst mit einem geringst möglichen Aufwand an Zeit und Geld wieder in den Ausgangszustand zurückzuversetzen, bzw. zu reparieren. Denn wenn es nach Brechen der Sollbruchstelle zu einer aufwendigen Reparatur käme, dann wäre das Ziel verfehlt.

Das Brechen der Sollbruchstelle ist auch noch aus anderen Gründen, als den Kosten der Wiederherstellung des Ausgangszustandes des Suspensionslösungsfiltersiebkorbs problematisch. Der Suspensionslösungsfiltersiebkorb hat ja die Funktion, die Pumpe, die Rohrleitungen und die Sprühdüsen vor Verstopfung und vor Beschädigung zu schützen und die S_{O2} Abscheidung effizient zu halten. Wenn nun der Siebkorbdeckel des Suspensionslösungsfiltersiebkorbs an der Sollbruchstelle bricht, dann fließt ja die Suspensionsflüssigkeit ungefiltert zur Pumpe. Dies ist dann nicht mehr vermeidbar.

Allerdings ist auch in dieser Situation immer noch eine größere Betriebssicherheit gegeben als bei einem Betrieb ohne Suspensionslösungsfiltersiebkorb (oder mit zerstörtem Suspensionslösungsfiltersiebkorb). Größere Festkörper befinden sich natürlich eher im unteren Teil des Sumpfes - aufgrund ihres Gewichts. Da der Siebkorbdeckel an der oberen Seite des Suspensionslösungsfiltersiebkorbs eingebaut ist, wirkt der Suspensionslösungsfiltersiebkorb noch immer wie ein Gatter, das die Masse der Festkörper zurückhält. Es wird nur ein kleiner Teil von wahrscheinlich eher kleinen Festkörpern den Weg in die Pumpe finden. Das ist zwar negativ aber nicht mehr ganz zu vermeiden.

In einer Ausführungsform ist der Siebkorbdeckel mit zwei haltenden Verbindungen ausgestattet und die eine schwächer ausgeführte Verbindung dient als Sollbruchstelle. Die Sollbruchstelle bricht bei Erreichen einer bestimmten Scherspannung und entlastet damit den Suspensionslösungsfiltersiebkorb von der Sauglast der Pumpe. Der Siebkorbdeckel besteht vorzugsweise aus zwei Teilen, bzw. aus einem Deckel und einem Deckelrand, die bevorzugt über Rippen miteinander verbunden sind. Diese Rippen können durch zwei Haltemechanismen, bzw. haltenden Verbindungen miteinander verbunden sein - beispielsweise einer vorzugsweise die Drehachse eines Gelenks bildenden Haltestange und eines Auflagers, welches einen Brechbolzen umfasst. Der Brechbolzen umfasst vorzugsweise eine Schraube, beispielsweise aus Polypropylen (PP). Der Brechbolzen stellt dabei das schwächste Glied dar. Der Brechbolzen wird bei Betrieb der Rauchgasentschwefelungsvorrichtung mit Scherspannung beansprucht und wird irgendwann abgeschert, wenn diese Scherspannung eine Maximallast übersteigt. Vorzugsweise ist durch die Verwendbarkeit von mindestens eines weiteren Brechbolzens die Last, bei der die Sollbruchstelle bricht, einstellbar. Die andere Verbindung - die auch nach Brechen der Sollbruchstelle den Siebkorbdeckel mit dem Suspensionslösungsfiltersiebkorb verbindet - ist als deutlich stabilere Konstruktion, vorzugsweise mit einer Stahleinlage verstärkt, ausgeführt.

In einer weiteren Ausführungsform ist der Siebkorbkörper mit einer Auflage ausgestattet, auf der der Siebkorbdeckel lagert und diese Auflage ist so ausgestaltet, dass bei Erreichen einer bestimmten Last diese Auflage abgeschert wird und der Suspensionslösungsfiltersiebkorb von der Sauglast der Pumpe entlastet wird.

Die Auflage umfasst bevorzugt Brechbolzen, die beispielsweise als PP-Schrauben ausgebildet sind. Hier sind diese jedoch in den Siebkorbkörper eingebaut und der Siebkorbdeckel liegt auf ihnen, wodurch sie bevorzugt auf Scherung beansprucht sind. Wenn die Last nun zu groß wird, dann scheren die Brechbolzen irgendwann ab. Der Siebkorbdeckel klappt daraufhin in den Suspensionslösungsfiltersiebkorb hinein und bleibt im Strömungslee hängen.

Die Löcher haben bevorzugt einen kreisförmigen Querschnitt. Ihre Form ist in dieser Ausführungsform also kegelstumpfförmig, mit anderen Worten konisch und der außen liegende Lochdurchmesser ist kleiner, als der innen liegende Lochdurchmesser.

Der Suspensionslösungsfiltersiebkorb weist bevorzugt einen Bereich mit einer halbrunden oder halbovalen Form auf. Die Löcher sind bevorzugt in diesem Bereich angeordnet. Der Bereich kann den gesamten Suspensionslösungsfiltersiebkorb umfassen.

Vorzugsweise ist eine - bevorzugt halbrund oder halboval gebogene - Platte vorgesehen, in der die Löcher angeordnet sind.

Die Platte hat vorzugsweise Wandstärken von etwa 15-20 mm.

Vorzugsweise umfasst der Suspensionslösungsfiltersiebkorb Kunststoff, besonders bevorzugt thermoplastisches Material und ganz besonders bevorzugt Polypropylen.

Die erfindungsgemäße Aufgabe wird in ihrem Verfahrensaspekt dadurch gelöst, dass die runde oder halbrunde Form des halbrunden oder halbovalen Bereichs des Suspensionslösungsfiltersiebkorbs durch Biegen erzeugt wird und bei der Herstellung des Suspensionslösungsfiltersiebkorbs die Löcher vor dem Biegen so eingebracht werden, dass sie auch nach dem Biegen noch eine sich von außen nach innen durchgehend aufweitende Form aufweisen. Es werden also die Löcher von vorne herein sich aufweitend ausgeführt, allerdings mit dem aufgeweiteten Querschnitt auf der Seite, die bei montiertem Suspensionslösungsfiltersiebkorb der Strömung abgewandt sein wird, also der späteren Innenseite und dem engeren Querschnitt auf der Seite, die bei montiertem Suspensionslösungsfiltersiebkorb der Strömung zugewandt sein wird, also der späteren Außenseite des Suspensionslösungsfiltersiebkorbs. Anschließend wird die runde oder halbrunde Form des Bereichs des Suspensionslösungsfiltersiebkorbs durch Biegen erzeugt. Die sich aufweitende Form der Löcher ist so stark ausgeprägt, dass auch nach dem Biegen die Löcher noch eine ausgeprägt sich von außen nach innen aufweitende Form haben.

Das Biegen führt ja bekanntermaßen dazu, dass der außen liegende Lochquerschnitt aufgeweitet und der innen liegende Lochquerschnitt verkleinert wird. Die sich aufweitende Form des Lochs vor der Biegung kompensiert und überkompensiert also die durch das Biegen entstehende Deformation.

Bevorzugt werden Löcher mit einem kreisförmigen Querschnitt, also konische Löcher eingebracht. Der außen liegende Lochdurchmesser ist hierbei kleiner als der innen liegende Lochdurchmesser.

Die Löcher werden bevorzugt gebohrt. Sie können auch auf andere Weise eingebracht werden.

Trotz dieser verbesserten Konfiguration mit konischen Löchern kann es jedoch zu Verstopfungen kommen, die durch backflush während des Betriebs nicht gereinigt werden können.

Dafür gibt es eine Vielzahl von Gründen - zum Beispiel chemische Reaktionen, die die Löcher langsam zuwachsen lassen, eine besonders hohe Anzahl von Festkörpern, die den gesamten Sumpf der REA füllen usw. In diesen Fällen führt das Rückspülen aus der Pumpe nicht mehr zum Reinigungserfolg, der notwendig ist.

In diesem Fall drohen zwei Gefahren:
1. Beschädigung des Suspensionslösungsfiltersiebkorbes
   Wenn die Saugkräfte der Pumpe auf den Suspensionslösungsfiltersiebkorb zu groß werden, werden die Wände irgendwann nachgeben und es kommt zu einer massiven Verformung des Suspensionslösungsfiltersiebkorbs - Totalschaden.
2. Kavitation in der Pumpe
   Die Pumpe muss gegen einen zu großen Druckverlust anarbeiten und das führt irgendwann zu Kavitation, die zu erheblichen Schäden in der Pumpe führen kann.

Beides sind Schäden, die vermieden werden sollten. Allerdings kommt es nun immer wieder vor, dass Kraftwerke aus irgendwelchen Gründen das Problem nicht bemerken oder aus übergeordneten Gründen die REA trotz des erkannten Problems weiter betreiben müssen.

Die Erfindung soll nun anhand von in den Zeichnungen gezeigten Ausführungsbeispielen näher erläutert werden. Es zeigen schematisch und ausschnittsweise:
- Fig. 1: links eine Schnittdarstellung einer aus dem Stand der Technik bekannten Platte im ungebogenen Zustand mit zylindrischen Löchern, rechts die Darstellung dieser Platte im gebogenen Zustand;
- Fig. 2: das Feststecken eines Festkörpers in Löchern einer Platte wie in Fig. 1 rechts gezeigt;
- Fig. 3: eine Platte eines erfindungsgemäßen Suspensionslösungsfiltersiebkorbes in einer Fig. 1 entsprechenden Darstellung;
- Fig. 4: das Passieren eines Festkörpers durch ein Loch einer Platte wie in Fig. 3 rechts dargestellt;
- Fig. 5: eine Seitendarstellung eines oberen Bereiches eines erfindungsgemäßen Suspensionslösungsfiltersiebkorbes mit Siebkorbdeckel, der eine Sollbruchstelle aufweist;
- Fig. 6: eine andere Ausführungsform in einer Fig. 5 entsprechenden Ansicht;
- Fig. 7: eine Frontalansicht eines Suspensionslösungsfiltersiebkorbes in der Ausführungsform gemäß Fig. 5;
- Fig. 8: eine Darstellung eines Querschnitts entlang der Linie AA in Fig. 7;
- Fig. 9: eine Draufsicht auf einen Suspensionslösungsfiltersiebkorb wie in Fig. 7;
- Fig. 10: eine perspektivische Darstellung eines Teils eines Suspensionslösungsfiltersiebkorbes, ohne Platte.

Der Suspensionslösungsfiltersiebkorb umfasst eine Platte 2 aus Polypropylen, die zu einem halbrund oder halboval gebogen ist. Die Platte hat eine Wandstärke von etwa 15-20 mm. In die Platte 2 sind Löcher 6a eingebracht.

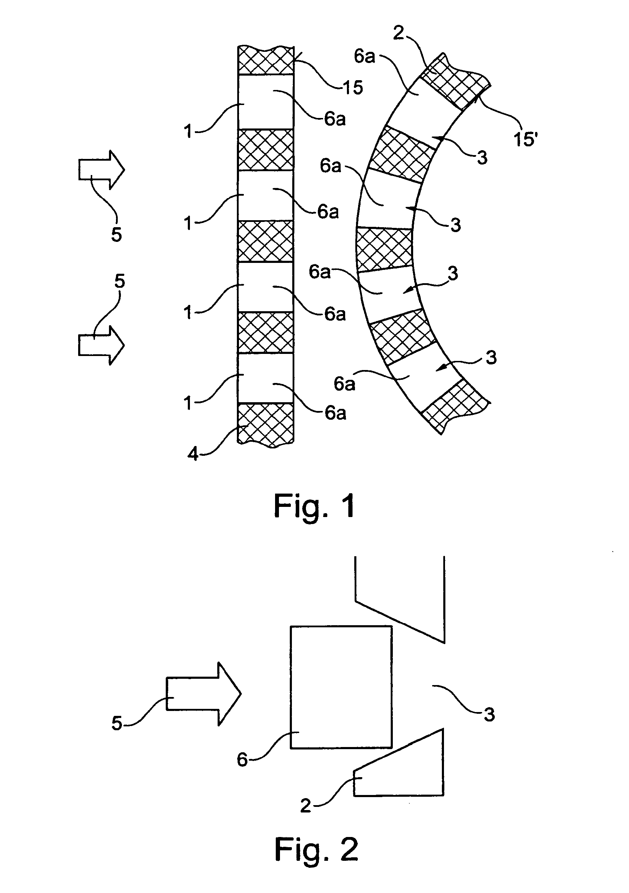

In Fig. 1 ist das Entstehen der konischen Löcher von Platten von Suspensionslösungsfiltersiebkörben, die im Stand der Technik bekannt sind, gezeigt. Wie der linken Darstellung in Fig. 1 zu entnehmen, sind diese Löcher 1 zunächst zylindrisch. Ihre Konusform entsteht erst durch die Biegung. Diese Löcher 3 verjüngen sich zur Innenseite 15' des Suspensionslösungsfiltersiebkorbes hin. In Fig. 2 ist die Problematik der derart konischen Löcher 3 gezeigt. Es ist ein Festkörper 6 zu sehen, der in einem derart konischen Loch 3 feststeckt. Der Pfeil 5 in Fig. 2 symbolisiert die Flussrichtung der Suspensionslösung.

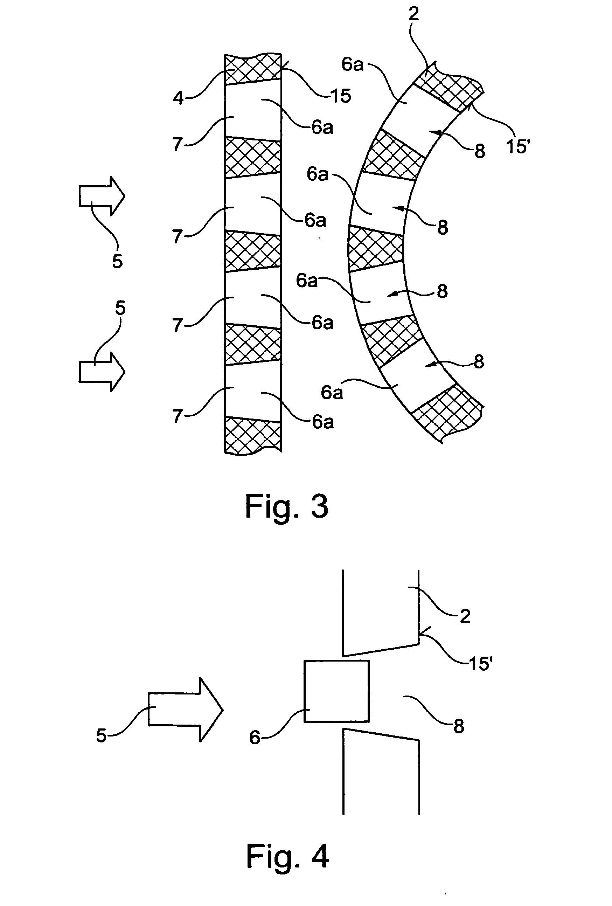

Fig. 3 zeigt, wie auf erfindungsgemäße Art und Weise die konische Form der Löcher wie im Stand der Technik vermieden und stattdessen die vorteilhafte konische Form der Löcher in Platten 2 von erfindungsgemäßen Suspensionslösungsfiltersiebkörben erreicht wird. Die Löcher 6a sind bereits bei der in Fig. 3 links dargestellten, noch ungebogenen Platte 4 konisch ausgebildet. Sie sind in die ungebogene Platte 4 konisch gebohrt, derart, dass sie sich zu der Seite 15, die nach dem Biegen die Innenseite 15' des Suspensionslösungsfiltersiebkorbes bildet, aufweiten. Der Öffnungswinkel der konischen Löcher 8 in der noch ungebogenen Platte 4 ist dabei so groß, dass die sich zu der Seite 15 (die nach dem Biegen die Innenseite 15' des Suspensionslösungsfiltersiebkorbes bildet) hin aufweitende Konusform der Löcher auch nach dem Biegen der Platte erhalten bleibt, wie dies aus der rechten Darstellung der Fig. 3 hervorgeht. Die Innenseite des Suspensionslösungsfiltersiebkorbs 15' ist die strömungsabgewandte Seite des Suspensionslösungsfiltersiebkorbs. Der mittlere Durchmesser der Löcher 7 beträgt etwa 20 mm bis 25 mm.

Fig. 4 zeigt, dass die sich nach innen aufweitenden konischen Löcher 8 der gebogenen Platte 2 zumindest weitgehend verstopfungsfrei sind. Denn ein Festkörper 6 ist entweder so groß, dass er in die Löcher 8 nicht eindringen kann oder er kann die Löcher, nach dem er den Locheintrittsquerschnitt passiert hat, durch den sich im weiteren Verlauf aufweitenden Querschnitt problemlos durchqueren.

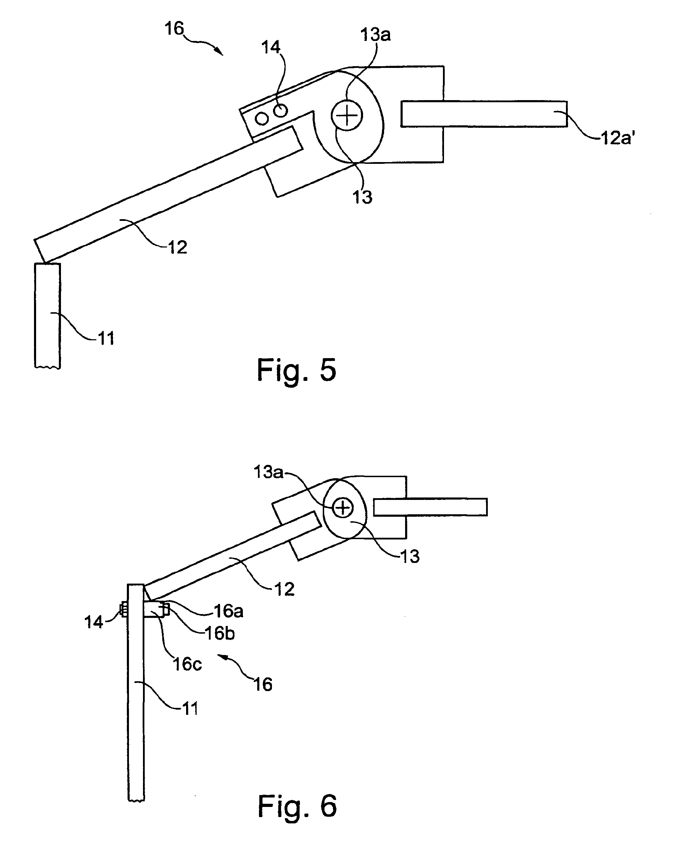

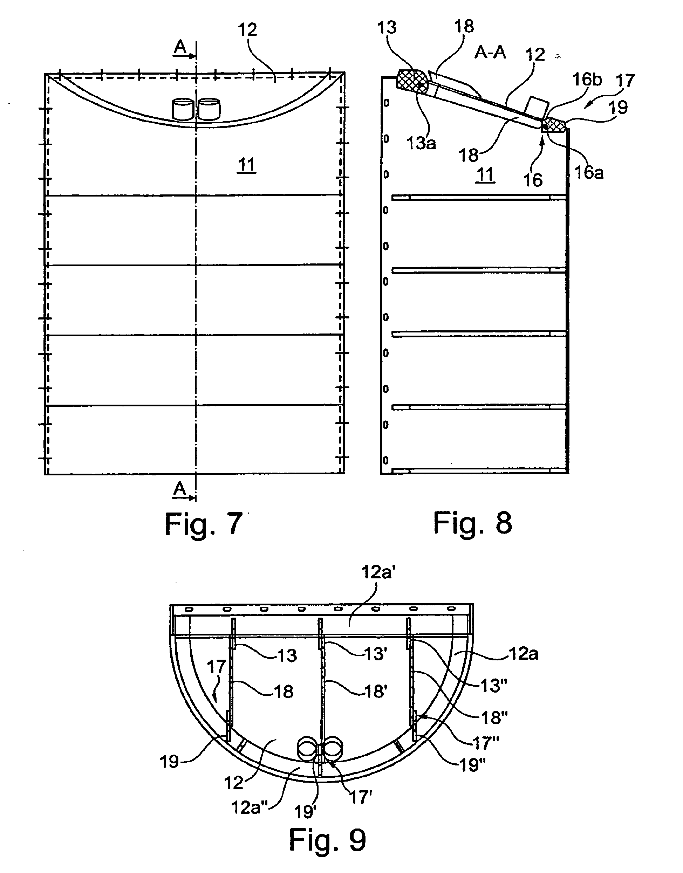

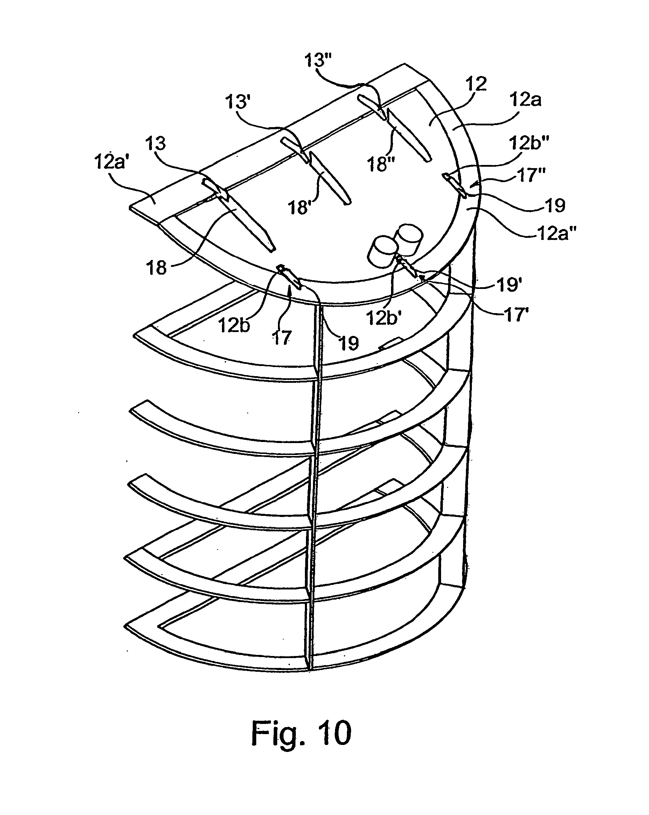

Fig. 5 und Figuren 7 bis 10 zeigen ein Ausführungsbeispiel, bei dem der Suspensionslösungsfiltersiebkorb mit einer Sollbruchstelle 16 versehen ist. Der Siebkorbdeckel 12 ist in geschlossenem Zustand von einem Deckelrand 12a eingefasst, der mit dem Siebkorbkörper 11 fest verbunden ist. Der Deckelrand 12a umfasst einen im hinteren Bereich des Siebkorbs angeordneten geraden Bereich 12a' und einen im vorderen Bereich des Siebkorbs angeordneten halbringförmigen Bereich 12a". Der Siebkorbdeckel 12 ist mit dem geraden Bereich 12a' mittels dreier Basisgelenke 13, 13', 13" schwenkbar verbunden. Die Basisgelenke 13, 13', 13" sind mit Rippen 18, 18', 18" wirkverbunden, bzw. umfassen Rippen 18, 18', 18", die sich teilweise oberhalb des Deckels 12 und teilweise unterhalb des Deckels 12 erstrecken. An dem halbringförmigen Bereich 12a" des Deckelrandes 12a sind drei Auflager 17, 17', 17" vorgesehen. Jedes Auflager 17, 17', 17" umfasst ein vertikales, plattenförmiges Element 19, 19', 19", welches an dem halbringförmigen Bereich 12a" befestigt ist. Jedes plattenförmige Element ist von einem überstehenden Brechbolzen 16a durchgriffen, der durch eine PP-Schraube 16b gebildet wird. Auf den PP-Schrauben 16b liegen die Rippen 18, 18', 18", die sich über zumindest nahezu die gesamte Deckeltiefe erstrecken, auf. Wenn die Last auf dem Siebkorbdeckel 12 einen Maximalwert überschreitet, dann scheren die Brechbolzen ab und der Siebkorbdeckel 12 gibt dem Druck nach und schwenkt um die Basisgelenke 13, 13', 13" nach innen. Die Rippen 18, 18', 18" sind fest an dem Deckel 12 angeordnet. Die plattenförmigen Elemente 19, 19', 19" ragen bei geschlossenem Deckel 12 von dem Deckelrand 12a in zu diesem Zweck vorgesehene Ausnehmungen bzw. Schlitze 12b, 12b', 12b" des Deckels 12.

Fig. 6 zeigt ein weiteres Ausführungsbeispiel eines mit Sollbruchstelle 16 ausgestatteten Suspensionslösungsfiltersiebkorbs. Der eine haltende Verbindung bildende Brechbolzen 16a, der wiederum als PP-Schraube 16b ausgeführt ist, ist gegenüber des Basisgelenks 13, welches die zweite haltende Verbindung bildet, an dem Siebkorbkörper 11 angeordnet. Der Siebkorbdeckel 12 liegt auf dem Brechbolzen 16a auf. Der Brechbolzen 16a bilden also eine Auflage 16c für den Siebkorbdeckel 12. Bei einem Überschreiten eines auf dem Siebkorbdeckel lastenden Maximaldrucks schert die PP-Schraube 16b ab und der Siebkorbdeckel 12 schwenkt um das Basisgelenk 13 nach innen. Es können drei Basisgelenke 13 und drei Auflagen 16c vorgesehen sein.

Bei beiden geschilderten Ausführungsbeispielen der Sollbruchstelle 16 ist also sichergestellt, dass der Siebkorbdeckel nach dem "Brechen" der Sollbruchstelle 16 an dem Suspensionslösungsfiltersiebkorb gehalten ist und nicht in die Pumpe geraten kann. Ein nach außen Schwenken des Deckels 12, etwa bei einem "backflush", ist bei beiden in den Fig. 5 bis 10 gezeigten Ausführungsbeispielen ohne weiteres möglich.

### Bezugszeichenliste

- 1: zylindrisch gebohrte Löcher
- 2: gebogene Platte
- 3: konische Löcher als Folge der Biegung
- 4: Platte vor Biegung
- 5: Flussrichtung
- 6: Festkörper
- 6a: Löcher
- 7: konisch gebohrte Löcher
- 8: konisch gebohrte Löcher nach Biegung
- 11: Siebkorbkörper
- 12: Siebkorbdeckel
- 12a, 12a', 12a": Deckelrand
- 12b, 12b', 12b": Deckelschlitze
- 13: Basisgelenk
- 13a: Haltestange
- 14: Sicherungsbolzen
- 15: Seite der ungebogenen Platte, die nach dem Biegen zur Innenseite des Suspensionslösungsfiltersiebkorbs wird
- 15': Innenseite des Suspensionslösungsfiltersiebkorbs
- 16: Sollbruchstelle
- 16a: Brechbolzen
- 16b: PP-Schraube
- 16c: Auflage
- 17, 17', 17": Auflager
- 18, 18', 18": Rippen
- 19, 19', 19": plattenförmiges Element

## Patentansprüche

1. Rauchgasentschwefelungsvorrichtung,
mit einem Sumpf mit Suspensionslösung,
mit mindestens einer Rezirkulationsleitung,
mit mindestens einer Rezirkulationspumpe,
mit Sprühdüsen
und mit Gipsentwässerung,
wobei in Fließrichtung der Suspensionslösung vor der Rezirkulationsleitung und/oder vor dem Gipsentwässerungsprozess mindestens ein Suspensionslösungsfiltersiebkorb vorgesehen ist,
wobei an dem Suspensionslösungsfiltersiebkorb eine Sollbruchstelle (16) vorgesehen ist, die bei Überschreiten einer Sauglast der Pumpe auf den Siebkörper (11) auslöst und damit eine Entlastung des Siebkörpers (11) von den Kräften bewirkt und
der Suspensionslösungsfiltersiebkorb einen Siebkorbdeckel (12) aufweist, der an der oberen Seite des Suspensionslösungsfiltersiebkorbs angeordnet ist und die Sollbruchstelle (16) nach dem Auslösen eine zumindest teilweise Öffnung von zumindest Teilen des Siebkorbdeckels (12) bewirkt,
wobei
der Suspensionslösungsfiltersiebkorb Löcher (6a) aufweist,
wobei
der Suspensionslösungsfiltersiebkorb, wenn der Siebkorbdeckel (12) des Suspensionslösungsfiltersiebkorbs an der Sollbruchstelle (16) bricht, noch immer wie ein Gatter wirkt, das die Masse der Festkörper (6) zurückhält und daher nur ein kleiner Teil von wahrscheinlich eher kleinen Festkörpern den Weg in die Pumpe finden.

2. Rauchgasentschwefelungsvorrichtung nach Anspruch 1, **dadurch gekennzeichnet, dass** die Löcher (6a) sich - vorzugsweise konisch - aufweiten.

3. Rauchgasentschwefelungsvorrichtung nach Anspruch 1 oder 2, **dadurch gekennzeichnet, dass** der Suspensionslösungsfiltersiebkorb einen halbrunden oder halbovalen Bereich aufweist und die Löcher (6a, 7) in diesem Bereich angeordnet sind.

4. Rauchgasentschwefelungsvorrichtung nach einem der Ansprüche 1 bis 3, **dadurch gekennzeichnet, dass** Mittel vorgesehen sind, durch die der Siebkorbdeckel (12) nach dem Öffnen aufgrund des Auslösens der Sollbruchstelle (16) mit dem Suspensionslösungsfiltersiebkorb verbunden bleibt.

5. Rauchgasentschwefelungsvorrichtung nach Anspruch 4, **dadurch gekennzeichnet, dass** der Siebkorbdeckel (12) mit zwei haltenden Verbindungen ausgestattet ist und die eine schwächer ausgeführte Verbindung als Sollbruchstelle (16) dient.

6. Rauchgasentschwefelungsvorrichtung nach Anspruch 4, **dadurch gekennzeichnet, dass** der Siebkorbkörper mit einer Auflage (16c) ausgestattet ist, auf der der Siebkorbdeckel (12) lagert und diese Auflage so befestigt ist, dass bei Erreichen einer bestimmten Last diese Auflage abgeschert wird.

7. Rauchgasentschwefelungsvorrichtung nach einem der Ansprüche 1 bis 6, **dadurch gekennzeichnet, dass** der Suspensionslösungsfiltersiebkorb eine Platte (2) umfasst, in der die Löcher (6a, 7) angeordnet sind und die Platte (2) zu einem Halbrund oder Halboval gebogen ist.

8. Rauchgasentschwefelungsvorrichtung nach Anspruch 7, **dadurch gekennzeichnet, dass** die Platte (2) eine Wandstärke von etwa 15-20 mm hat.

9. Rauchgasentschwefelungsvorrichtung nach einem der Ansprüche 1 bis 8, **dadurch gekennzeichnet, dass** der Suspensionslösungsfiltersiebkorb Kunststoff umfasst.

10. Rauchgasentschwefelungsvorrichtung nach Anspruch 9, **dadurch gekennzeichnet, dass** der Suspensionslösungsfiltersiebkorb thermoplastisches Material umfasst.

## Claims

1. A flue-gas desulfurization device, comprising
a sump having a suspension solution,
at least one recirculation line,
at least one recirculation pump,
spray nozzles,
and gypsum dewatering,
wherein at least one suspension-solution filter sieve basket is provided before the recirculation line and/or before the gypsum dewatering process in a flow direction of the suspension solution,
wherein a predetermined breaking point (16) is provided on the suspension-solution filter sieve basket, which predetermined breaking point (16) is triggered when a suction load of the pump on the sieve body (11) is exceeded, and thus relieves the sieve body (11) of the forces, and
the suspension-solution filter sieve basket has a sieve-basket cover (12), which is arranged on the top side of the suspension-solution filter sieve basket, and the predetermined breaking point (16) causes at least partially opening of at least parts of the sieve-basket cover (12) after the predetermined breaking point (16) has been triggered,
wherein
the suspension-solution filter sieve basket has holes (6a),
wherein
if the sieve-basket cover (12) of the suspension-solution filter sieve basket breaks at the predetermined breaking point (16), the suspension solution filter sieve basket still acts as a grating that holds the mass of the solids (6) back, and therefore only a small part of probably rather small solids enter the pump.

2. The flue-gas desulfurization device according to claim 1, **characterized in that** the holes (6a) are flared, preferably conically.

3. The flue-gas desulfurization device according to claim 1 or 2, **characterized in that** the suspension-solution filter sieve basket has a semicircular or semioval region and the holes (6a, 7) are arranged in said region.

4. The flue-gas desulfurization device according to one of claims 1 to 3, **characterized in that** elements are provided, by means of which the sieve-basket cover (12) remains connected to the suspension-solution filter sieve basket after the opening caused by the triggering of the predetermined breaking point (16).

5. The flue-gas desulfurization device according to claim 4, **characterized in that** the sieve-basket cover (12) is equipped with two retaining connections and the one weaker connection serves as the predetermined breaking point (16).

6. The flue-gas desulfurization device according to claim 4, **characterized in that** the sieve-basket body is equipped with a support (16c), on which the sieve-basket cover (12) is supported, and said support is fastened in such a way that said support is sheared off when a certain load is reached.

7. The flue-gas desulfurization device according to one of claims 1 to 6, **characterized in that** the suspension-solution filter sieve basket comprises a plate (2), in which the holes (6a, 7) are arranged, and the plate (2) is bent into a semicircle or semioval.

8. The flue-gas desulfurization device according to claim 7, **characterized in that** the plate (2) has a wall thickness of approximately 15-20 mm.

9. The flue-gas desulfurization device according to one of claims 1 to 8, **characterized in that** the suspension-solution filter sieve basket comprises plastic.

10. The flue-gas desulfurization device according to claim 9, **characterized in that** the suspension-solution filter sieve basket comprises thermoplastic material.

## Revendications

1. Dispositif de désulfuration de gaz de combustion, comprenant
un réservoir contenant une solution de suspension,
au moins un conduit de recirculation,
au moins une pompe de recirculation,
des buses de pulvérisation et
un moyen de déshydratation du gypse
au moins un panier de filtration de solution de suspension étant prévu en amont du conduit de recirculation et/ou en amont du processus de déshydratation du gypse par référence au sens d'écoulement de la solution de suspension,
un point de rupture (16) étant prévu au niveau du panier de filtration de solution de suspension, lequel emplacement se déclenche en cas de dépassement d'une charge d'aspiration induite par la pompe sur le corps de filtration (11) et provoque donc une décharge du corps de filtration (11) vis-à-vis des forces et
le panier de filtration de solution de suspension comportant un couvercle de panier (12) qui est disposé du côté supérieur du panier de filtration de solution de suspension et le point de rupture (16) provoquant après le déclenchement une ouverture au moins partielle au moins de parties du couvercle de panier (12),
le panier de filtration de solution de suspension comportant des trous (6a),
lorsque le couvercle de panier (12) se rompt au point de rupture (16), le panier de filtration de solution de suspension se comportant toujours comme une grille qui retient la majeure partie du corps solide (6) et donc une petite partie seulement des corps solides probablement assez petits se trouvent sur le chemin menant à la pompe.

2. Dispositif de désulfuration de gaz de combustion selon la revendication 1, **caractérisé en ce que** les trous (6a) sont évasés de préférence de façon conique.

3. Dispositif de désulfuration de gaz de combustion selon la revendication 1 ou 2, **caractérisé en ce que** le panier de filtration de solution de **suspension comporte** une région semi-circulaire ou semi-ovale et les trous (6a, 7) sont disposés dans cette région.

4. Dispositif de désulfuration de gaz de combustion selon l'une quelconque des revendications 1 à 3, **caractérisé en ce qu'il** est prévu des moyens permettant de maintenir le couvercle de panier (12) relié au panier de filtration de solution de suspension après l'ouverture due au déclenchement du point de rupture (16).

5. Dispositif de désulfuration de gaz de combustion selon la revendication 4, **caractérisé en ce que** le couvercle de panier (12) est équipé de deux liaisons de retenue et **en ce que** l'une des liaisons, qui présente une moindre résistance mécanique, sert de point de rupture (16).

6. Dispositif de désulfuration de gaz de combustion selon la revendication 4, **caractérisé en ce que** le panier de filtration est équipé d'un support (16c) sur lequel le panier de filtration (12) est monté et ce support est fixé de telle sorte que, lorsqu'une charge déterminée est atteinte, ce support est cisaillé.

7. Dispositif de désulfuration de gaz de combustion selon l'une des revendications 1 à 6, **caractérisé en ce que** le panier de filtration de solution de suspension comprend une plaque (2) dans laquelle sont ménagés les trous (6a, 7) et la plaque (2) est pliée de façon à obtenir une forme semi-circulaire ou semi-ovale.

8. Dispositif de désulfuration de gaz de combustion selon la revendication 7, **caractérisé en ce que** la plaque (2) a une épaisseur de paroi d'environ 15 à 20 mm.

9. Dispositif de désulfuration de gaz de combustion selon l'une des revendications 1 à 8, **caractérisé en ce que** le panier de filtration de solution de suspension contient de la matière plastique.

10. Dispositif de désulfuration de gaz de combustion selon la revendication 9, **caractérisé en ce que** le panier de filtration de solution de suspension contient de la matière thermoplastique.
